(19) Europäisches Patentamt
European Patent Office
Office européen des brevets

(11) **EP 2 430 397 B1**

(12) **FASCICULE DE BREVET EUROPEEN**

(45) Date de publication et mention
de la délivrance du brevet:
**18.06.2014 Bulletin 2014/25**

(21) Numéro de dépôt: **10718223.0**

(22) Date de dépôt: **12.05.2010**

(51) Int Cl.:
***G01C 19/5747*** *(2012.01)*

(86) Numéro de dépôt international:
**PCT/EP2010/056514**

(87) Numéro de publication internationale:
**WO 2010/130765 (18.11.2010 Gazette 2010/46)**

(54) **STRUCTURE DE COUPLAGE POUR GYROMÈTRE RESONNANT**

KOPPELSTRUKTUR FÜR EINEN RESONANZKREISEL

COUPLING STRUCTURE FOR A RESONANT GYROSCOPE

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **15.05.2009 FR 0953228**

(43) Date de publication de la demande:
**21.03.2012 Bulletin 2012/12**

(73) Titulaire: **Commissariat à l'Énergie Atomique
et aux Énergies Alternatives
75015 Paris (FR)**

(72) Inventeur: **YACINE, Karim
F-78180 Montigny Le Bretonneux (FR)**

(74) Mandataire: **Ilgart, Jean-Christophe
BREVALEX
95 rue d'Amsterdam
75378 Paris Cedex 8 (FR)**

(56) Documents cités:
**US-A- 6 134 961     US-B1- 6 349 597**

**Description**

**DOMAINE TECHNIQUE**

La présente invention se rapporte à un capteur inertiel destiné à la mesure de vitesse angulaire suivant deux axes dans le plan (ou plus). Il s'agit d'un gyromètre et plus particulièrement d'un gyromètre micro-usiné.

**ÉTAT DE LA TECHNIQUE ANTÉRIEURE**

L'utilisation des gyromètres est multiple : automobile, aéronautique, robotique, ...

Comme tout produit entrant dans le domaine grand public comme l'automobile, où le coût est une donnée majeure, la réalisation collective de tels composant en technologie microélectronique devient très attractive.

La réalisation de gyromètres micro-usinés dans du silicium est déjà largement répandue. Ce type de composant comprend typiquement 2 masses mobiles couplées en antiphase, vibrant dans le plan à la résonance. Les masses sont excitées par le biais de forces électrostatiques ou piézoélectriques appliquées par l'intermédiaire de structures en peignes interdigités ou d'un actionneur piézoélectrique.

Si on admet que la vibration des masses s'exerce suivant l'axe x, lorsque le gyromètre tourne avec une certaine vitesse angulaire autour de l'axe y (orthogonal à l'axe x), la composition de la vibration forcée avec la vitesse angulaire induit des forces (forces de Coriolis) qui mettent les masses mobiles en vibration suivant z. La vibration est alors détectée par le biais de moyens capacitifs par des électrodes placées au-dessus des masses mobiles et permet de remonter à la valeur de la vitesse de rotation autour de l'axe y. L'intérêt d'avoir un couplage en antiphase des masse permet de différencier l'effet de l'accélération translationnelle suivant les axes y ou z, de l'effet Coriolis généré par une rotation suivant y ou z, la première provoquant un mouvement en phase des masses la seconde générant un mouvement en antiphase des masses, dans les sens de détection y ou z.

Cet état de l'art se décompose en deux parties :

- l'application à un gyromètre 1 axe selon lequel il n'existe a priori aucun système gyrométrique permettant à la fois de générer une antiphase naturelle (existante) et de pouvoir moduler l'amplitude de déplacement des masses indépendamment du déplacement imposé dans la zone d'actionnement ;

- l'application à un gyromètre 2 - 3-6 axes pour lesquels il n'existe pas de moyens comparables permettant de coupler mécaniquement en amplitude et en antiphase le mouvement d'excitation de 4 masses formant deux gyromètres parfaitement couplés en phase et amplitudes de déplacement en excitation.

La littérature sur les gyromètres 1 axe est très dense. Il existe notamment de nombreux brevets concernant la génération de couplage entre masse en détection ou en excitation. Des couplages qui se réalisent en antiphase en couplage modal fort ou faible (amplitude de mouvement).

Le brevet US 5 895 850 divulgue un gyromètre résonnant comprenant un substrat, une première et une deuxième masse résonnante vibrant en opposition de phase dans une direction et un sens privilégiés, un premier et un deuxième ressort reliés au substrat et aux résonateurs, les ressorts étant plus souples dans la direction souhaitée de vibration des résonateurs. Des éléments de détection permettent de mesurer l'effet de Coriolis agissant sur le résonateur dans une direction perpendiculaire à la direction de vibration. Une région de couplage couple les deux masses vibrantes, cette région incluant une masse de couplage et au moins un résonateur de couplage.

Le document WO-A-2006/037 928 divulgue un résonateur à masses oscillantes. Il s'agit d'un type de structure permettant d'avoir un couplage modal préférentiel en antiphase (c'est-à-dire que le mode d'antiphase précède de plusieurs kHz le mode en phase) en utilisant un réseau de poutres de forme carrée ou elliptique, ce réseau étant maintenu de part et d'autre par deux poutres droites de flexion ancrées. La structure reste cependant sensible aux modes parasites hors plan.

D'autres structures de l'art connu utilisent des liaisons pivot et mettent en oeuvre un couplage en antiphase (voir par exemple les documents US 2004/154 397 et US 2005/072 231). Cependant, ces structures ne permettent pas de moduler les amplitudes de déplacement.

Dans le cas de gyromètres à 2 axes dans le plan, il existe quelques études menées sur des structures spécifiques. La première étude identifiée a été publiée dans T. Juneau et al., « Dual axis operation of a micromachined rate gyroscope », Transducers, 1997 International Conference on Solid State Sensors and Actuators, vol. 2, 16-19 juin 1997, pages 883 à 886. Cette première étude a été suivie d'autres études sur les disques à masses oscillantes. Le gyromètre divulgué dans l'article de T. Juneau et al. présente en effet le défaut d'être très sensible au couplage entre axes transversaux (directions d'excitation et de détection).

Les études sur les disques à masses oscillantes ont donné lieu à diverses publications. On peut noter :

EP 2 430 397 B1

- l'article « Decoupled microgyros and the design principle DAVED » de W. Geiger et al., Sensors and Actuators A : Physical, vol. 95, n°2-3, 2002, pages 239 à 249 ;
- US 2005/0 210 978 ;
- l'article « Dual-axis microgyroscope with closed-loop detection » de S. An et al., The Eleventh Annual International Workshop on Micro Electro Mechanical Systems, 1998, 25 au 29 janvier 1998, pages 328 à 333.

Dans les structures décrites dans ces publications, il n'y a pas de couplage mécanique entre des différentes masses. L'ensemble des mouvements est commandé par un asservissement électrostatique.

On connaît aussi des gyromètres 2 axes basés sur le couplage de 4 diapasons. De tels gyromètres sont par exemple décrits dans les documents US 2007/0 013 464, WO 2008/021 534, US 5 763 781 et WO 2007/105 211. Ces gyromètres sont basés sur un couplage fort de 4 diapasons par la liaison d'ancrage central en excitation et en détection. Si un diapason est excité, les 3 autres diapasons vibreront à la même fréquence et en phase par rapport au diapason excité. Il s'agit d'une liaison de transmission de mouvement. Ces structures ont un ancrage central commun avec le substrat, ce qui induit un fonctionnement en rotation et non en translation.

US 6 134 961 divulgue un gyroscope un axe comprenant un ensemble de poutres (structure de couplage) permettant un couplage en antiphase entre les deux masses de détection du gyroscope. La structure de couplage présente un ancrage indirect au substrat par l'intermédiaire de poutres formant ressorts. Ainsi, la structure de couplage (appelée « quadrilateral loop ») est reliée à un cadre (appelé « coupling frame ») par l'intermédiaire de ressorts (appelés « spring beams ») et le cadre est ancré, par l'intermédiaire de ressorts (appelés « spring beams ») à des ancrages (appelés « floater anchors »).

US 6 349 597 divulgue une structure de couplage d'un gyroscope à détection d'axe dans le plan du substrat support. La structure de couplage est ancrée par l'intermédiaire de ressorts au niveau des moyens d'excitation. Un ressort permettant un mouvement dans la direction de détection (rotation selon l'axe y) est inclus dans la structure de couplage. Cette configuration rend assez difficile la fabrication d'un gyroscope pour une détection selon l'axe z.

## EXPOSÉ DE L'INVENTION

La présente invention est proposée pour améliorer les dispositifs gyroscopiques de l'art antérieur. Pour cela, il est proposé une structure de couplage à assemblage fermé de poutres pouvant par exemple être constitué de motifs ayant une forme de losange, de carré ou d'ellipse, constituant par exemple une étoile comprenant plusieurs losanges ou ellipses (sous la forme d'un treillis hyperstatique), sans ancrage au substrat, permettant de transmettre un déplacement axial en couplage fort dans au moins 4 directions et permettant de générer un mouvement d'antiphase naturelle, symétrique et modulé en amplitude pour au moins une paire de masses.

L'invention a donc pour objet une structure de couplage pour microgyromètre résonnant réalisé sur un substrat, la structure de couplage permettant de recueillir un mouvement vibratoire fourni par des moyens d'excitation comportant une partie fixe et une partie mobile, selon un premier axe et à le transmettre à des masses sismiques disposées dans un plan comprenant le premier axe, caractérisée en ce que la structure de couplage comprend un assemblage fermé de poutres relié aux masses sismiques de façon à être ancré à celles-ci, les masses étant elles-mêmes ancrées au substrat, l'assemblage étant disposé pour recueillir le mouvement vibratoire fourni par les moyens d'excitation et le transmettre aux masses sismiques selon au moins un deuxième axe contenu dans ledit plan, l'assemblage et la partie mobile des moyens d'excitation ne présentant pas de point d'ancrage au substrat.

Le gyromètre selon l'invention permet une décorrélation entre l'amplitude d'excitation et l'amplitude de déplacement des masses. Par ailleurs, le gyromètre de i'invention peut être monoaxe ou multiaxe. La géométrie de la structure de couplage permet notamment une vibration des masses sensiblement identique en phase et en amplitude.

L'assemblage fermé de poutres peut comprendre au moins un motif fermé ayant une forme choisie parmi un losange et une ellipse, le motif étant agencé pour recueillir le mouvement vibratoire selon l'un des axes du losange ou de l'ellipse et le transmettre selon l'autre axe du losange ou de l'ellipse. Le mouvement vibratoire peut être recueilli selon le grand axe du losange ou de l'ellipse et transmis selon le petit axe du losange ou de l'ellipse.

L'assemblage fermé de poutres peut comprendre au moins un motif fermé ayant une forme de carré, le motif étant agencé pour recueillir le mouvement vibratoire selon l'une des diagonales du carré et le transmettre selon l'autre diagonale du carré.

La structure de couplage peut, pour mettre en vibration au moins quatre masses sismiques sous l'effet de quatre moyens d'excitation, comprendre quatre motifs fermés, les motifs fermés étant reliés par l'un de leurs sommets en un point constituant le centre de symétrie de la structure de couplage, de façon à présenter des motifs opposés et alignés deux à deux, deux motifs opposés et alignés étant orthogonaux aux deux autres motifs opposés et alignés, deux motifs consécutifs étant destinés à être reliés chacun par une poutre à une desdites masses de façon que deux masses sismiques opposées sont situées sur un même axe passant par le centre de symétrie. Les sommets des motifs opposés au centre de symétrie de la structure de couplage peuvent être solidaires chacun d'un moyen d'excitation. Les deux axes des masses sismiques peuvent être orthogonaux entre eux et décalés de 45° par rapport aux motifs opposés et alignés.

Dans le cas où le motif fermé a une forme de losange, et pour mettre en vibration au moins six masses sismiques sous l'effet d'au moins quatre moyens d'excitation, la structure de couplage peut comprendre huit motifs en forme de losange juxtaposés, les motifs étant reliés par l'un de leurs sommets en un point constituant le centre de symétrie de la structure de couplage, de façon à présenter des motifs opposés et alignés deux à deux, les sommets des motifs opposés au centre de symétrie étant destinés à être solidaires chacun de l'une desdites six masses sismiques.

L'invention a aussi pour objet un microgyromètre résonnant formé à la surface d'un substrat, comprenant au moins deux masses sismiques aptes à se déplacer par rapport au substrat, et comprenant des moyens d'excitation destinés à mettre les masses sismiques en vibration par l'intermédiaire d'au moins une structure de couplage, dans lequel la structure de couplage est l'une des structures décrites ci-dessus.

## BRÈVE DESCRIPTION DES DESSINS

L'invention sera mieux comprise et d'autres avantages et particularités apparaîtront à la lecture de la description qui va suivre, donnée à titre d'exemple non limitatif, accompagnée des dessins annexés parmi lesquels :

- les figures 1A à 1C sont des schémas de principe d'un gyromètre résonnant un axe selon la présente invention,
- la figure 2 est un schéma de principe d'un gyromètre résonnant deux axes, à couplage antiphase avec amplitude de déplacement amplifiée, selon l'invention,
- les figures 3A à 3C sont des schémas de principe d'un gyromètre résonnant à quatre masses sismiques disposées dans un même plan et mettant en oeuvre une structure de couplage symétrique selon l'invention,

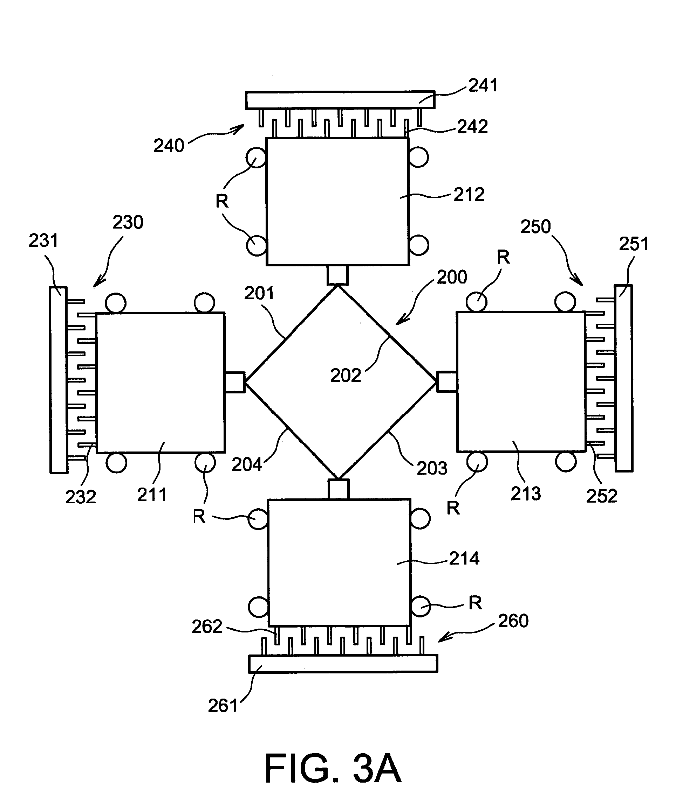

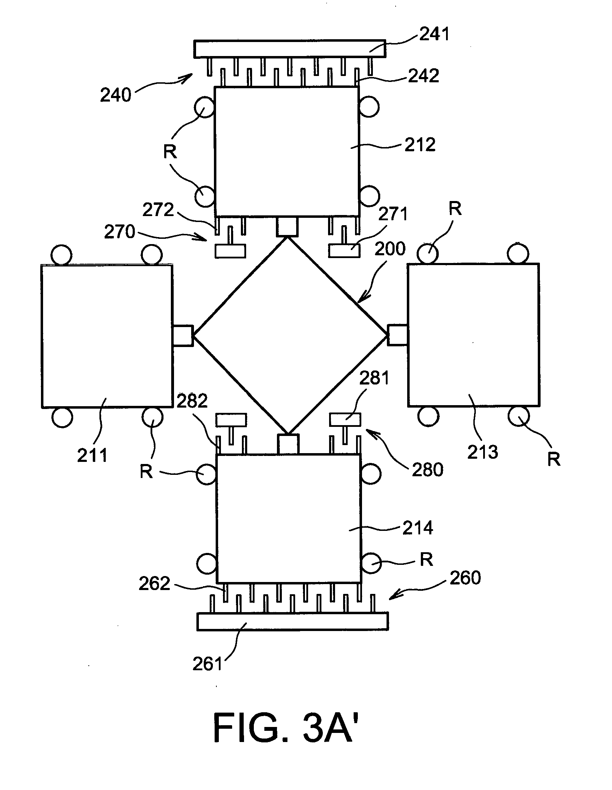

- la figure 3A' est une variante du gyromètre résonnant représenté à la figure 3A,

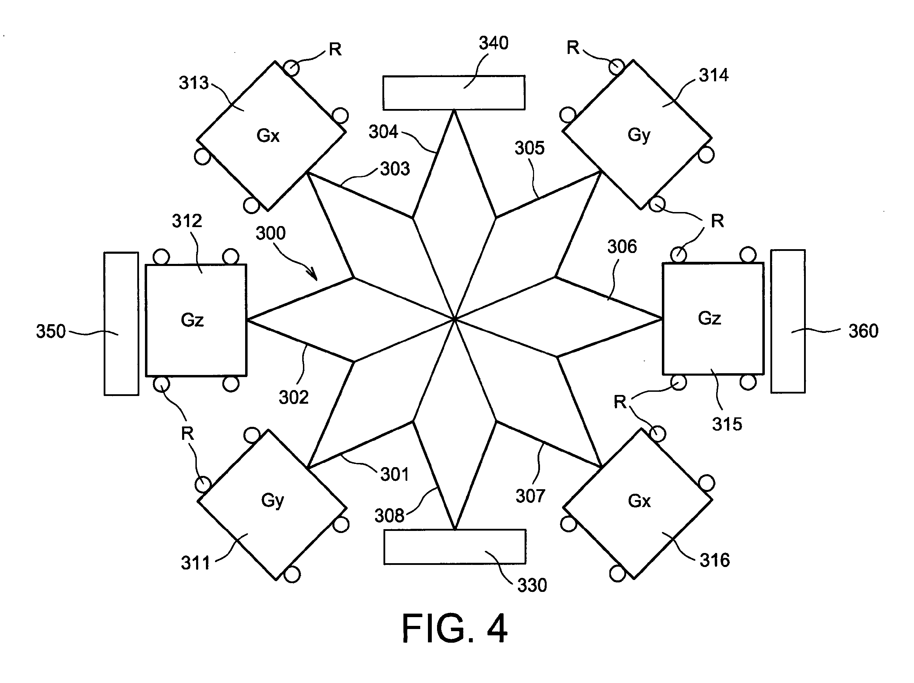

- la figure 4 est un schéma de principe d'un gyromètre résonnant à six masses sismiques déposées dans un même plan et mettant en oeuvre une structure de couplage en forme d'étoile à six branches selon l'invention,

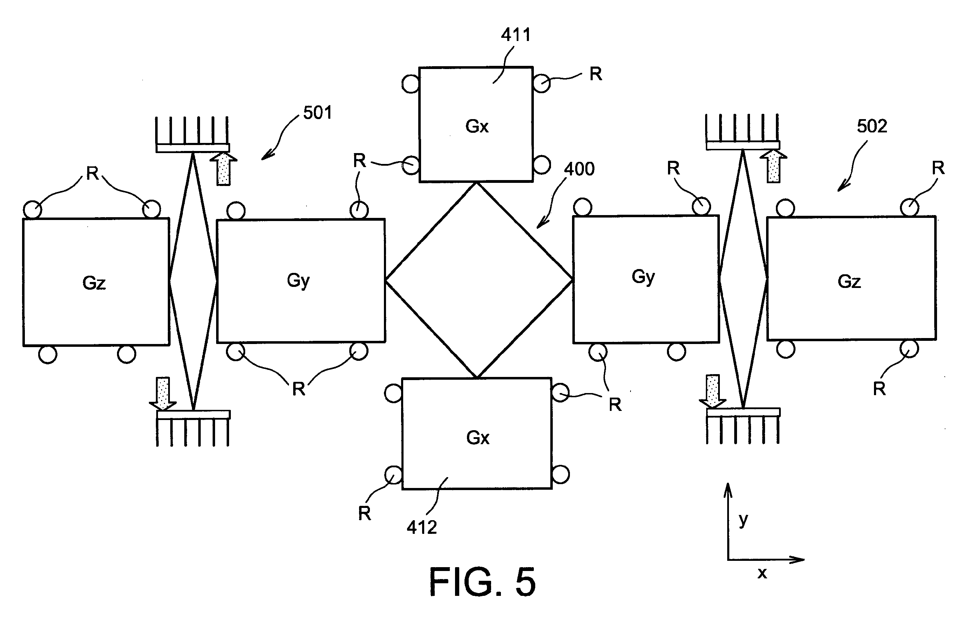

- la figure 5 est un schéma de principe d'un gyromètre résonnant utilisant trois structures de couplage selon la présente invention.

## EXPOSÉ DÉTAILLÉ DE MODES DE RÉALISATION PARTICULIERS

Dans toutes les figures décrites ci-après, chaque masse sismique est représentée ancrée au substrat par des moyens de liaison connus de l'homme de l'art. Ces moyens de liaison, référencés R sur les figures, sont par exemple des ressorts. Ils permettent de limiter certains déplacements des masses sismiques. Les moyens d'actionnement (ou d'excitation) des masses sismiques peuvent être du type à peignes capacitifs, comme représenté sur les figures annexées ou d'un autre type connu de l'homme de l'art.

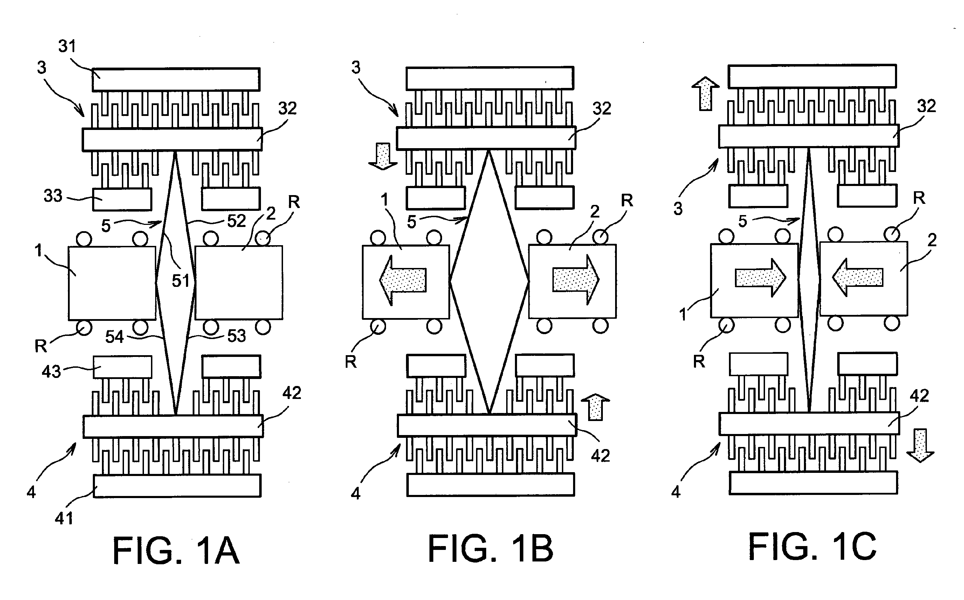

La figure 1A est un schéma de principe d'un gyromètre résonnant utilisant une structure de couplage selon la présente invention. Le gyromètre comprend une première masse sismique 1 et une deuxième masse sismique 2 apte à se déplacer, selon un premier axe par rapport à un substrat support, chacune selon la direction indiquée par des flèches sur les figure 1B et 1C. Les masses sismiques 1 et 2 sont mises en vibration grâce à des structures de peignes capacitifs interdigités 3 et 4 comme il est bien connu dans la technique. La structure de peignes 3 comprend deux peignes fixes 31 et 33 solidaires du substrat support et un peigne mobile 32 apte à se déplacer par rapport aux peignes fixes 31 et 33. La structure de peignes 4 comprend deux peignes fixes 41 et 43 solidaires du substrat support et un peigne mobile 42 apte à se déplacer par rapport aux peignes fixes 41 et 43. Les peignes mobiles 32 et 42 se déplacent selon un deuxième axe par rapport au substrat support. Les premier et deuxième axes sont orthogonaux entre eux et parallèles au substrat.

Le gyromètre résonnant comprend une structure de couplage 5 formée de quatre poutres 51, 52, 53 et 54 mises bout à bout pour constituer un losange dont l'un des axes est confondu avec l'axe de déplacement des masses sismiques 1 et 2 et dont le deuxième axe est confondu avec l'axe de déplacement des peignes mobiles 32 et 42. La structure de couplage 5 est fixée par des angles opposés du losange aux peignes mobiles 32 et 42 et par les deux autres angles opposés aux masses sismiques 1 et 2.

La figure 1A représente le gyromètre résonnant à l'état de repos. La figure 1B représente le gyromètre résonnant dans un état excité tel que les peignes mobiles 32 et 42 se rapprochent l'un de l'autre. La déformation de la structure de couplage 5 force alors les masses 1 et 2 à s'écarter l'une de l'autre. La figure 1C représente le gyromètre résonnant dans un état excité tel que les peignes mobiles 32 et 42 s'écartent l'un de l'autre. La déformation de la structure de couplage 5 force alors les masses 1 et 2 à se rapprocher l'une de l'autre.

L'utilisation d'un losange allongé permet de transmettre un mouvement modulé (amplifié ou diminué) et de guider en antiphase (de manière amplifiée ou diminuée) dans la direction orthogonale en supprimant des degrés de liberté. Cette liaison ne dispose pas de point d'ancrage. C'est elle qui produit l'excitation par translation axiale des apex formant un angle aigu par exemple. Ceci permet de transmettre un déplacement amplifié dans la direction orthogonale égale de part et d'autre et modulé en antiphase sur les deux masses reliées aux deux apex formant un angle obtus par exemple.

Ceci permet de dissocier l'actionnement de la surface des masses et de dissocier l'amplitude d'excitation générée par un dispositif électrostatique thermique ou piézoélectrique de l'amplitude des mouvements de chacune des masses, en garantissant la conservation de la phase et de l'amplitude du mouvement des deux masses quelles que soient les dissymétries technologiques.

L'amplitude de chaque masse est réglée :

- par la rigidité globale de l'ensemble du système suivant la direction d'excitation et ramené au nombre de masse,
- la force appliquée sur la liaison centrale
- le coefficient de qualité globale du système.

La structure de couplage représentée à la figure 1 pourrait être en forme d'ellipse plutôt que de losange. Il suffit pour cela de remplacer chaque poutre droite de la structure de couplage par une poutre arquée.

L'utilisation d'une forme carrée, circulaire, en étoile, etc. pour la structure de couplage permet d'envisager la réalisation d'un gyromètre deux axes dans le plan, parfaitement couplé en excitation. En particulier, les formes orthosymétriques ou à symétrie radiale permettent une transmission de déplacement de même amplitude dans plusieurs directions.

L'utilisation d'une forme en étoile permet d'envisager la réalisation d'une matrice inertielle parfaitement couplée en excitation. L'utilisation de toute forme géométrique de ce type permet d'envisager l'actionnement d'un système de masses à travers cette liaison de couplage qui lie les masses entres elles. Le paramétrage des dimensions de ces formes géométriques de manière orthotropique permet d'envisager, à déplacement imposé dans une direction, de pouvoir paramétrer les amplitudes de déplacements générés dans les autres directions.

On propose également, selon la présente invention, un gyromètre de type structure à cardan, avec excitation de quatre masses sismiques à la résonance mais suivant deux axes, et génération de forces de Coriolis suivant une direction orthogonale à ces axes de vibration et aux deux axes de rotation, respectivement.

Une liaison centrale non ancrée qui peut prendre plusieurs formes (carré inversé, cercle, étoile) permet un couplage fort de chaque masse sismique axisymétrique (en antiphase).

Si une masse est excitée, les 3 autres vibreront à la même fréquence, la même amplitude et en anti-phase par rapport à la masse excitée.

Ainsi, grâce à un couplage fort multi-masse pour l'excitation, une seule unité de détection (par « feedback ») de l'excitation électronique est nécessaire.

Seules deux masses peuvent être excitées, la détection pouvant être réalisée sur les deux autres.

La présente invention se différentie de l'état de l'art en ce qu'elle propose le couplage fort de deux ou plusieurs directions d'excitation de masses sismiques à cardan produisant un mouvement axisymétrique (en opposition de phase) par le moyen d'une liaison centrale non ancrée possédant au moins deux axes de symétries. Cet aspect offre entre autres l'avantage de réduire le nombre d'architectures indépendantes pour produire une matrice inertielle 3 (6) axes permettant de réduire la superficie et donc le coût de fabrication de celle-ci.

Sur le principe du couplage fort, le déplacement d'une masse sera reproduit à l'identique sur l'ensemble des autres masses. Ceci permet de réduire le nombre d'asservissements électroniques, de transmettre une amplitude d'excitation et une fréquence de résonance égale sur toute les masses suivant la relation suivante :

$$\omega_0 = \sqrt{\frac{\sum m_i}{\sum k_i}}$$

$m_i$ et $k_i$ représentant les masses et raideurs respectives de chacune des masses

Quelles que soient les masses $m_i$ et constantes $k_i$ de raideur relative, en supposant des défauts de masse ou de raideur relative, la sommation de l'ensemble des masses, s'il s'agit de structure répliquée permet de réduire l'impact des imperfections sur les caractéristiques programmées du gyromètre. L'amplitude $X_{exc}$ du déplacement de la masse excitée est :

$$X_{exc} = \frac{Q_{exc}F_{exc}}{k_{exc}}$$

avec $Q_{exc}$ = facteur de qualité de la masse excitée,
$k_{exc}$ = raideur dans le sens d'excitation,
$F_{exc}$ = force d'excitation.

La Force de Coriolis $E_{Coriolis}$ transmise par le mouvement d'excitation pour l'ensemble des masses ne différera que par les défauts des masses découplées de détection.

$$\left|F_{Coriolis}\right| = 2 \cdot m_{det\,i} \cdot \omega_{exc} \cdot X_{exc}$$

avec : $m_{deti}$ = masse de chacun des éléments de détection,
$\omega_{exc}$ : pulsation d'excitation.

La variation de sensibilité entre les axes devient uniquement dépendante des paramètres de masses sismiques de détection

$$S_{mi} = \frac{2 \cdot m_{i\,det} \cdot Q_{det} \cdot \omega_{exc} \cdot X_{exc}}{k_i}$$

avec : $Q_{det}$ : facteur de qualité de détection,
$k_i$ : raideur de chaque élément de détection.

L'utilisation de formes en treillis plus complexes tel que l'assemblage de losanges de dimensions variables permettrait de réaliser en même temps l'amplification du déplacement imposé et le couplage des déplacements en opposition de phases respectives.

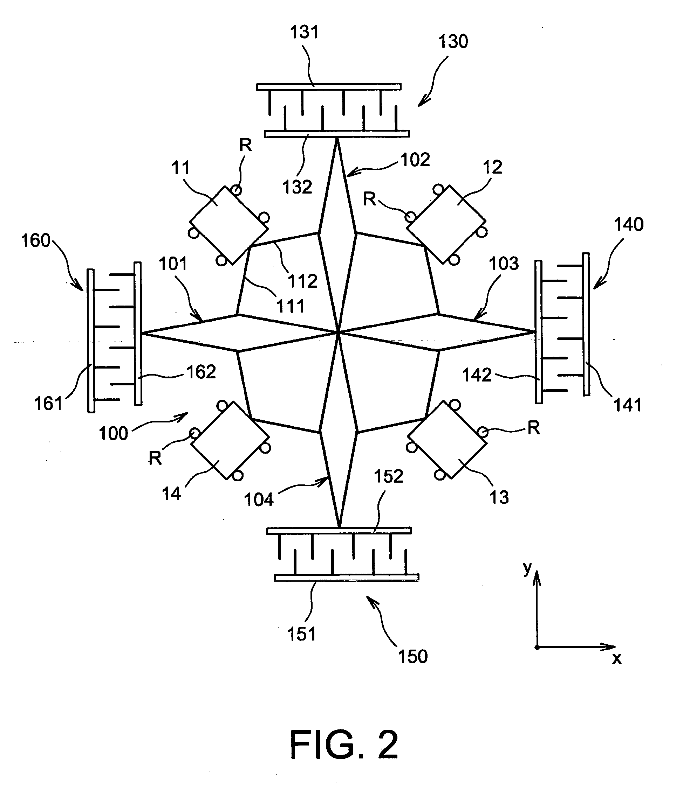

La figure 2 est un schéma de principe d'un autre gyromètre résonnant utilisant une structure de couplage selon la présente invention. Il s'agit d'un gyromètre deux axes, à couplage antiphase avec amplitude de déplacement amplifiée.
Le gyromètre comprend deux masses sismiques 11 et 13 situées sur un premier axe parallèle au substrat support, et deux masses sismiques 12 et 14 situées sur un deuxième axe parallèle au substrat support et orthogonal au premier axe. Chaque masse sismique est apte à se déplacer selon l'axe sur lequel elle se trouve.
Les masses sismiques sont mises en vibration grâce à des structures de peignes capacitifs interdigités 130, 140, 150 et 160. Ces peignes ont été représentés de manière simplifiée pour ne pas surcharger la figure 2. La structure de peignes 130 comprend un peigne fixe 131, solidaire du substrat support, et un peigne mobile 132 apte à se déplacer par rapport au peigne fixe 131. La structure de peignes 140 comprend un peigne fixe 141, solidaire du substrat support, et un peigne mobile 142 apte à se déplacer par rapport au peigne fixe 141. La structure de peignes 150 comprend un peigne fixe 151, solidaire du substrat support, et un peigne mobile 152 apte à se déplacer par rapport au peigne fixe 151. La structure de peignes 160 comprend un peigne fixe 161, solidaire du substrat support, et un peigne mobile 162 apte à se déplacer par rapport au peigne fixe 161.
Le gyromètre résonnant comprend une structure de couplage 100 constituée par un treillis complexe. Ce treillis comprend quatre losanges 101, 102, 103 et 104 constitués chacun par un assemblage de poutres comme pour la figure 1. Les losanges 101 et 103 sont mis bout à bout et leurs grands axes sont alignés. Les losanges 102 et 104 sont également mis bout à bout et leurs grands axes sont également alignés. Les grands axes des losanges 101 et 103 sont orthogonaux aux grands axes des losanges 102 et 104. Le point de rencontre des losanges 101 à 104 constitue le centre de symétrie de la structure de couplage 100.
Les sommets des losanges 101, 102, 103 et 104, opposés au centre de symétrie de la structure de couplage, sont solidaires des peignes mobiles respectivement 162, 132, 142 et 152. Chaque structure de peignes est disposée de sorte que l'axe de déplacement de son peigne mobile est confondu avec le grand axe du losange qui est solidaire de ce peigne mobile.

Les axes de déplacement des masses 11 à 14 et les axes d'excitation des structures de peignes 130, 140, 150 et 160 sont donc décalés de 45°.

La structure de couplage 100 comprend d'autres poutres permettant de la rattacher aux masses sismiques 11 à 14. Ce rattachement se fait de manière similaire pour chaque masse à un même point de la masse situé sur son axe de déplacement. Ainsi, la masse 11 est rattachée par des poutres 111 et 112 aux losanges qui lui sont le plus proches, c'est-à-dire les losanges 101 et 102. Ce rattachement se fait aux apex les plus proches des losanges concernés et qui font un angle obtus.

L'utilisation des gyromètres est multiple : en automobile, en aéronautique, en robotique, ...

Comme tout produit entrant dans le domaine grand public comme l'automobile, où le coût est une donnée majeure, la réalisation collective de tels composant en technologie microélectronique devient très attractive.

La réalisation d'un gyromètre micro-usiné dans du silicium est déjà largement répandue. Ce type de composant comprend typiquement deux masses mobiles couplées, vibrant dans le plan à la résonance (montage en diapason). Les masses sont excitées par le biais de forces électrostatiques appliquées par l'intermédiaire de structures en peignes interdigités.

Si on admet que la vibration des masses s'exerce suivant l'axe x, lorsque le gyromètre tourne avec une certaine vitesse angulaire autour de l'axe y (orthogonal à l'axe x), la composition de la vibration forcée avec la vitesse angulaire induit des forces (forces de Coriolis) qui mettent les masses mobiles en vibration suivant z. La vibration est alors détectée par le biais de moyens capacitifs par des électrodes placées au-dessus des masses mobiles et permet de remonter à la valeur de la vitesse de rotation autour de l'axe y.

La structure de couplage de la figure 2 met en oeuvre des losanges. Ces losanges peuvent selon la présente invention être remplacés par des ellipses, pourvu que la structure de couplage reste symétrique.

Les figures 3A à 3C sont des schémas de principe d'un gyromètre résonnant à quatre masses sismiques disposées dans un même plan et mettant en oeuvre une structure de couplage symétrique.

La figure 3A représente le gyromètre résonnant à l'état de repos. Le gyromètre comprend deux masses sismiques 211 et 213 situées sur un premier axe parallèle au substrat support et deux masses sismiques 212 et 214 situées sur un deuxième axe parallèle au substrat support et orthogonal au premier axe. Chaque masse sismique est apte à se déplacer selon l'axe sur lequel elle se trouve.

Les masses sismiques sont mises en vibration grâce à des structures de peignes capacitifs interdigités 230, 240, 250 et 260. La structure de peignes 230 comprend un peigne fixe 231, solidaire du substrat support, et un peigne 232 solidaire de la masse 211. La structure de peignes 240 comprend un peigne fixe 241, solidaire du substrat support, et un peigne 242 solidaire de la masse 212. La structure de peignes 250 comprend un peigne fixe 251, solidaire du substrat support, et un peigne 252 solidaire de la masse 213. La structure de peignes 260 comprend un peigne fixe 261, solidaire du substrat support, et un peigne 262 solidaire de la masse 214.

Le gyromètre résonnant comprend une structure de couplage 200 de la forme d'un carré pivoté de 45°. Le carré formant la structure de couplage comprend une poutre 201 reliant les masses 211 et 212, une poutre 202 reliant les masses 212 et 213, une poutre 203 reliant les masses 213 et 214 et une poutre 204 reliant les masses 214 et 211.

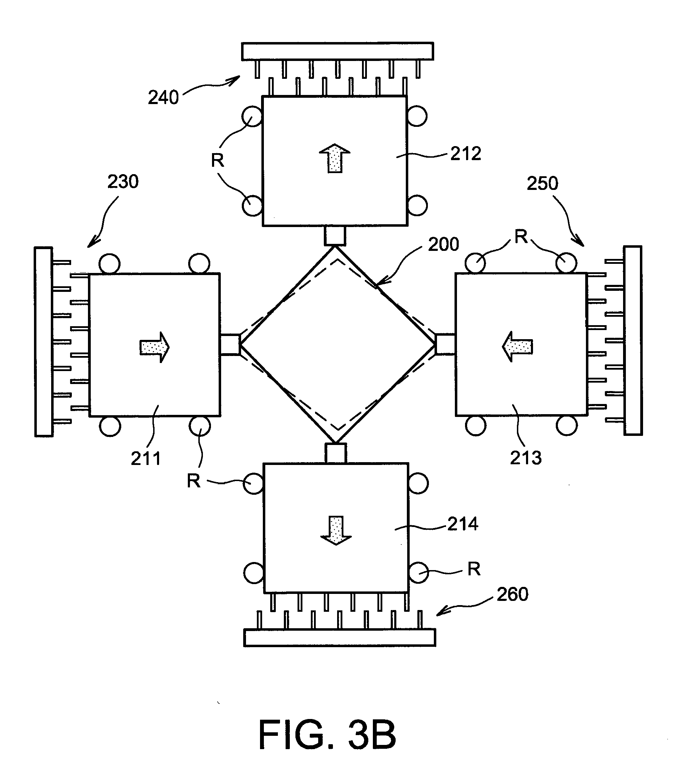

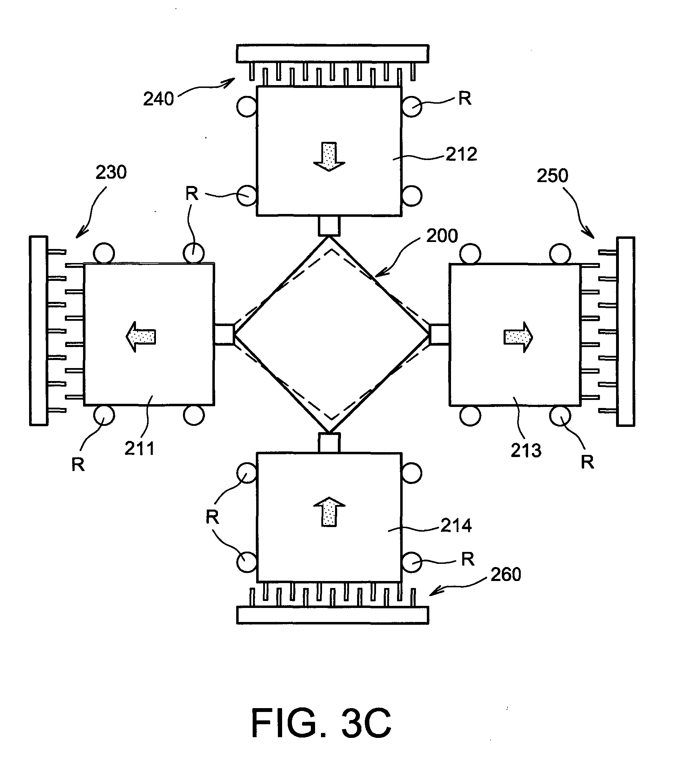

Les figures 3B et 3C représentent le gyromètre résonnant lorsqu'un signal d'excitation est envoyé aux structures de peignes interdigités 230 et 250, par exemple. La structure de couplage 200 se déforme alors : elle se transforme de carré en losange.

La figure 3B représente un état où les masses 211 et 213 s'écartent l'une de l'autre. Dans ce cas, les masses 212 et 214 se rapprochent l'une de l'autre. La structure de couplage 200 forme un losange dont le grand axe correspond à l'axe des masses 211 et 213, et dont le petit axe correspond à l'axe des masses 212 et 214. La structure de couplage 200 est représentée en trait plein dans son état déformé et en trait interrompu dans son état non déformé, c'est-à-dire au repos.

La figure 3C représente un état où les masses 211 et 213 se rapprochent l'une de l'autre. Dans ce cas, les masses 212 et 214 s'écartent l'une de l'autre. La structure de couplage 200 forme un losange dont le grand axe correspond à l'axe des masses 212 et 214, et dont le petit axe correspond à l'axe des masses 211 et 213. La structure de couplage 200 est représentée en trait plein dans son état déformé et en trait interrompu dans son état non déformé, c'est-à-dire au repos.

La figure 3A' est une variante du gyromètre résonnant représenté à la figure 3A. Les éléments de ce gyromètre qui sont identiques à ceux de la figure 3A sont référencés à l'identique. Les deux paires de masses de ce gyromètre sont représentées au repos. Dans cette variante, une seule paire de masses est excitée : les masses 212 et 214. Par rapport au schéma de la figure 3A, la masse 212 est aussi excitée par la structure de peignes capacitifs 270 et la masse 214 est aussi excitée par la structure de peignes capacitifs 280. La structure 270 comprend un peigne fixe 271, solidaire du substrat support, et un peigne 272 solidaire de la masse 212. La structure 280 comprend un peigne fixe 281, solidaire du substrat support, et un peigne 282 solidaire de la masse 214.

La figure 4 est un schéma de principe d'un gyromètre résonnant à six masses sismiques déposées dans un même plan et mettant en oeuvre une structure de couplage en forme d'étoile à huit branches selon l'invention.

La structure de couplage 300 est constituée de poutres assemblées pour obtenir huit losanges identiques 301 à 308, juxtaposés et ayant un sommet commun constituant le centre de symétrie de la structure de couplage. Les sommets d'un premier groupe de trois losanges juxtaposés 301, 302 et 303, ces sommets étant opposés au centre de symétrie de la structure de couplage, sont chacun solidaires d'une masse sismique 311, 312 et 313, respectivement. Les sommets d'un deuxième groupe de trois losanges juxtaposés 305, 306 et 307, ces sommets étant opposés au centre de symétrie de la structure de couplage, sont chacun solidaires d'une masse sismique 314, 315 et 316, respectivement.

Les deux groupes de losanges juxtaposés sont symétriques par rapport au centre de symétrie de la structure de couplage 300.

Sur la figure 4, les dispositifs d'actionnement sont représentés par des rectangles. Ce sont par exemple des structures à peignes capacitifs. Le gyromètre comprend quatre dispositifs d'actionnement 330, 340, 350 et 360. Les dispositifs d'actionnement 330 et 340 agissent respectivement sur les sommets opposés des losanges 308 et 304. Ils sont alignés sur une droite passant par le centre de symétrie de la structure de couplage. Les dispositifs d'actionnement 350 et 360 agissent respectivement sur les sommets opposés des losanges 302 et 306 par l'intermédiaire, respectivement, des masses 312 et 315. Ils sont alignés sur une droite passant par le centre de symétrie de la structure de couplage et perpendiculaire à la droite sur laquelle sont alignés les dispositifs d'actionnement 330 et 340.

Chaque masse sismique permet de détecter un mouvement vibratoire selon l'une des directions x, y ou z comme indiqué sur la figure 4.

La figure 5 est un schéma de principe d'un gyromètre résonnant utilisant trois structures de couplage selon l'invention.

Dans cette figure, on trouve une première structure de couplage 400 constituée de poutres et ayant la forme d'un carré pivoté de 45° à l'état de repos. Une première diagonale du carré formant la structure de couplage 400 constitue un premier axe x pour le gyromètre tandis qu'une deuxième diagonale du carré formant la structure de couplage 400 constitue un deuxième axe y pour le gyromètre, orthogonal au premier axe.

La structure de couplage 400 couple, selon l'axe x, deux dispositifs 501, 502 tel que celui représenté à la figure 1A. Pour cela, la structure de couplage 400 est rendue solidaire, par un premier sommet du carré situé sur l'axe x, de l'une des deux masses d'un premier dispositif tel que celui représenté à la figure 1A. La structure de couplage 400 est aussi rendue solidaire, par un deuxième sommet du carré situé sur l'axe x, de l'une des deux masses d'un deuxième dispositif tel que celui représenté à la figure 1A.

La structure de couplage 400 couple aussi, selon l'axe y, deux masses sismiques 411 et 412. Pour cela, la structure de couplage 400 est rendue solidaire, par un premier sommet du carré situé sur l'axe y, de la masse sismique 411. La structure de couplage 400 est aussi rendue solidaire, par un deuxième sommet du carré situé sur l'axe y de la masse sismique 412.

Un tel microgyromètre possédant la structure de couplage selon l'invention peut être réalisé sur un substrat SOI selon des techniques connues de l'homme de l'art.

D'autres variantes de réalisation sont possibles. Une structure de couplage sous forme d'étoile à huit branches, constituant un treillis, permet d'envisager une amplification des déplacements dans quatre directions de l'espace en même temps que la réalisation d'un gyromètre deux axes sur le même principe que décrit précédemment. Cependant, l'excitation doit être asservie sur quatre branches mais ne nécessite pas d'ancrage central.

Une structure de couplage présentant une étoile à au moins six branches permet de réaliser un couplage dans au moins six directions, cependant les masses en vis-à-vis sont en phase.

## Revendications

**1.** Structure de couplage pour microgyromètre résonnant réalisé sur un substrat, la structure de couplage permettant de recueillir un mouvement vibratoire fourni par des moyens d'excitation (3, 4, 130, 140, 150, 160) comportant une partie fixe (31, 33) et une partie mobile (32), selon un premier axe et à le transmettre à des masses sismiques (1, 2, 11, 12, 13, 14) disposées dans un plan comprenant le premier axe, et comprenant un assemblage de poutres (5, 100) disposé pour recueillir le mouvement vibratoire fourni par les moyens d'excitation et le transmettre aux masses sismiques selon au moins un deuxième axe contenu dans ledit plan, **caractérisée en ce que** ledit assemblage de poutres (5, 100) est fermé et relié aux masses sismiques et à la partie mobile des moyens d'excitations, les masses étant elles-mêmes ancrées au substrat, et **en ce que** l'assemblage (5) et la partie mobile (32) des moyens d'excitation ne présentent pas de point d'ancrage au substrat.

**2.** Structure de couplage selon la revendication 1, dans laquelle l'assemblage fermé de poutres comprend au moins un motif fermé ayant une forme choisie parmi un losange et une ellipse, le motif étant agencé pour recueillir le mouvement vibratoire selon l'un des axes du losange ou de l'ellipse et le transmettre selon l'autre axe du losange ou de l'ellipse.

3. Structure de couplage selon la revendication 2, dans laquelle le mouvement vibratoire est recueilli selon le grand axe du losange ou de l'ellipse et transmis selon le petit axe du losange ou de l'eliipse.

4. Structure de couplage selon la revendication 1, dans laquelle l'assemblage formé de poutres comprend au moins un motif fermé ayant une forme de carré, le motif étant agencé pour recueillir le mouvement vibratoire selon l'une des diagonales du carré et le transmettre selon l'autre diagonale du carré.

5. Structure de couplage selon l'une quelconque des revendications 2 à 4, pour mettre en vibration au moins quatre masses sismiques (11, 12, 13, 14) sous l'effet de quatre moyens d'excitation (130, 140, 150, 160), comprenant quatre motifs fermés (101 à 104), les motifs fermés étant reliés par l'un de leurs sommets en un point constituant le centre de symétrie de la structure de couplage, de façon à présenter des motifs opposés et alignés deux à deux, deux motifs opposés et alignés étant orthogonaux aux deux autres motifs opposés et alignés, deux motifs consécutifs (101, 102) étant destinés à être reliés chacun par une poutre (111, 112) à une desdites masses (11) de façon que deux masses sismiques opposées sont situées sur un même axe passant par le centre de symétrie.

6. Structure de couplage selon la revendication 5, dans laquelle les sommets des motifs opposés au centre de symétrie de la structure de couplage sont solidaires chacun d'un moyen d'excitation.

7. Structure de couplage selon l'une des revendication 5 ou 6, dans laquelle les deux axes des masses sismiques sont orthogonaux entre eux et décalés de 45° par rapport aux motifs opposés et alignés.

8. Structure de couplage selon la revendication 2 lorsque le motif fermé a une forme de losange, pour mettre en vibration au moins six masses sismiques sous l'effet d'au moins quatre moyens d'excitation, la structure de couplage comprenant huit motifs en forme de losange juxtaposés, les motifs étant reliés par l'un de leurs sommets en un point constituant le centre de symétrie de la structure de couplage, de façon à présenter des motifs opposés et alignés deux à deux, les sommets des motifs opposés au centre de symétrie étant destinés à être solidaires chacun de l'une desdites six masses sismiques.

9. Microgyromètre résonnant formé à la surface d'un substrat, comprenant au moins deux masses sismiques aptes à se déplacer par rapport au substrat, et comprenant des moyens d'excitation destinés à mettre les masses sismiques en vibration par l'intermédiaire d'au moins une structure de couplage, **caractérisé en ce que** la structure de couplage est une structure selon l'une quelconque des revendications 1 à 8.

**Patentansprüche**

1. Kopplungsstruktur für ein auf einem Substrat hergestelltes Resonanz-Mikrogyrorneter, wobei die Kopplungsstruktur ermöglicht, eine Vibrationsbewegung aufzunehmen, die durch Anregungsmittel (3, 4, 130, 140, 150, 160) geliefert wird, die einen festen Teil (31, 33) und einen beweglichen Teil (32) umfassen, längs einer ersten Achse, und diese an seismische Massen (1, 2, 11, 12, 13, 14) zu übertragen, die in einer Ebene angeordnet sind, welche die erste Achse umfasst, und umfassend eine Balken-Anordnung (5, 100), die angeordnet ist, um die durch die Anregungsmittel gelieferte Vibrationsbewegung aufzunehmen und diese auf die seismischen Massen längs wenigstens einer zweiten Achse zu übertragen, die in der Ebene enthalten ist, **dadurch gekennzeichnet, dass** die Balken-Anordnung (5, 100) geschlossen und mit den seismischen Massen und dem beweglichen Teil der Anregungsmittel verbunden ist, wobei die Massen selbst auf dem Substrat verankert sind, und dadurch, dass die Anordnung (5) und der bewegliche Teil (32) der Anregungsmittel keinen Verankerungspunkt auf dem Substrat aufweisen.

2. Kopplungsstruktur nach Anspruch 1, wobei die geschlossene Balken-Anordnung wenigstens ein geschlossenes Motiv umfasst, mit einer Form, die ausgewählt ist aus einer Raute und einer Ellipse, wobei das Motiv dazu eingerichtet ist, die Vibrationsbewegung entlang einer der Achsen der Raute oder der Ellipse aufzunehmen, und sie entlang der anderen der Achse der Raute oder der Ellipse zu übertragen.

3. Kopplungsstruktur nach Anspruch 2, wobei die Vibrationsbewegung entlang der großen Achse der Raute oder der Ellipse aufgenommen und entlang der kleinen Achse der Raute oder der Ellipse übertragen wird.

4. Kopplungsstruktur nach Anspruch 1, wobei die aus Balken gebildete Anordnung wenigstens ein geschlossenes Motiv mit einer quadratischen Form umfasst, wobei das Motiv dazu eingerichtet ist, die Vibrationsbewegung entlang einer der Diagonalen des Quadrats aufzunehmen und sie entlang der anderen Diagonalen des Quadrats zu übertragen.

5. Kopplungsstruktur nach einem der Ansprüche 2 bis 4, um wenigstens vier seismische Massen (11, 12, 13, 14) unter der Wirkung von vier Anregungsmitteln (130, 140, 150, 160) in Schwingung zu versetzen, umfassend vier geschlossene Motive (101 bis 104), wobei die geschlossenen Motive durch jeweils eine von ihren Spitzen in einem Punkt verbunden sind, der das Symmetrie-Zentrum der Kopplungsstruktur bildet, so dass paarweise gegenüberliegende und ausgerichtete Motive vorliegen, wobei zwei gegenüberliegende und ausgerichtete Motive orthogonal zu den zwei anderen gegenüberliegenden und ausgerichteten Motiven sind, wobei zwei aufeinander folgende Motive (101, 102) dazu bestimmt sind, jeweils durch einen Balken (111, 112) mit einer der Massen (11) so verbunden zu sein, dass zwei gegenüberliegende seismische Massen auf einer gleichen Achse liegen, die durch das Symmetrie-Zentrum verläuft.

6. Kopplungsstruktur nach Anspruch 5, wobei die Spitzen der Motive gegenüber von dem Symmetrie-Zentrum der Kopplungsstruktur jeweils mit einem Anregungsmittel fest verbunden sind.

7. Kopplungsstruktur nach einem der Ansprüche 5 oder 6, wobei die zwei Achsen der seismischen Massen zueinander orthogonal und in Bezug auf die gegenüberliegenden und ausgerichteten Motive um 45° versetzt sind.

8. Kopplungsstruktur nach Anspruch 2, wenn das geschlossene Motiv eine Rauten-Form hat, um wenigstens sechs seismische Massen unter der Wirkung von wenigstens vier Anregungsmitteln in Schwingung zu versetzen, wobei die Kopplungsstruktur acht aneinandergereihte Motive in Rauten-Form aufweist, wobei die Motive durch jeweils eine von ihren Spitzen in einem Punkt verbunden sind, der das Symmetrie-Zentrum der Kopplungsstruktur bildet, so dass paarweise gegenüberliegende und ausgerichtete Motive vorliegen, wobei die Spitzen von Motiven gegenüber dem Symmetrie-Zentrum dazu bestimmt sind, jeweils mit einer der sechs seismischen Massen fest verbunden zu sein.

9. Resonanz-Mikrogyrometer, welches auf der Oberfläche von einem Substrat ausgebildet ist, umfassend wenigstens zwei seismische Massen, die dazu geeignet sind, sich in Bezug auf das Substrat zu bewegen, und umfassend Anregungsmittel, die dazu bestimmt sind, die seismischen Massen vermittels wenigstens einer Kopplungsstruktur in Schwingung zu versetzen, **dadurch gekennzeichnet, dass** die Kopplungsstruktur eine Struktur nach einem der Ansprüche 1 bis 8 ist.

**Claims**

1. A coupling structure for a resonant microgyroscope produced on a substrate, where the coupling structure enables a vibratory movement supplied by excitation means (3, 4, 130, 140, 150, 160) comprising a fixed part (31,33) and a moving part (32), along a first axis to be detected, and enables it to be transmitted to seismic masses (1, 2, 11, 12, 13, 14) lying in a plane containing the first axis, and comprising an assembly of beams (5, 100) positioned to detect the vibratory movement provided by the excitation means, and to transmit it to the seismic masses along at least a second axis contained in the said plane, **characterised in that** said assembly of beams (5, 100) is closed and connected to the seismic masses and to the moving part of the excitation means, the masses being themselves anchored to the substrate, and **in that** the assembly and the moving part (32) of the excitation means have no point of anchorage to the substrate.

2. A coupling structure according to claim 1, in which the closed assembly of beams includes at least one closed pattern having a shape chosen from among a lozenge and an ellipse, where the pattern is positioned to detect the vibratory movement along one of the axes of the lozenge or of the ellipse, and to transmit it along the other axis of the lozenge or the ellipse.

3. A coupling structure according to claim 2, in which the vibratory movement is detected along the large axis of the lozenge or the ellipse, and transmitted along the small axis of the lozenge or the ellipse.

**4.** A coupling structure according to claim 1, in which the assembly formed of beams includes at least one square-shaped closed pattern, where the pattern is positioned to detect the vibratory movement along one of the diagonals of the square, and to transmit it along the other diagonal of the square.

**5.** A coupling structure according to any of the claims 2 to 4, to impart vibration to at least four seismic masses (11, 12, 13, 14) under the effect of four excitation means (130, 140, 150, 160), including four closed patterns (101 to 104), where the closed patterns are connected by one of their peaks at a point constituting the centre of symmetry of the coupling structure, so as to present patterns which are opposite and aligned two-by-two, where two opposite and aligned patterns are orthogonal to the other two opposite and aligned patterns, and where two consecutive patterns (101, 102) are each intended to be connected by a beam (111, 112) to one of the said masses (11), such that two opposite seismic masses are located on the same axis passing through the centre of symmetry.

**6.** A coupling structure according to claim 5, in which each of the peaks of the patterns opposite the centre of symmetry of the coupling structure is coupled securely to an excitation means.

**7.** A coupling structure according to one of claims 5 or 6, in which both axes of the seismic masses are mutually orthogonal, and offset by 45° relative to the opposite and aligned patterns.

**8.** A coupling structure according to claim 2 when the closed pattern has a lozenge shape, in order to impart vibration to at least six seismic masses under the effect of at least four excitation means, where the coupling structure includes eight juxtaposed lozenge-shaped patterns, where the patterns are connected by one of their peaks at a point constituting the centre of symmetry of the coupling structure, so as to present patterns which are opposite and aligned two-by-two, and where the peaks of the patterns opposite to the centre of symmetry are each intended to be coupled securely to one of the said six seismic masses.

**9.** A resonant microgyroscope formed at the surface of a substrate, including at least two seismic masses able to move relative to the substrate, and including excitation means intended to impart vibration to the seismic masses through at least one coupling structure, **characterised in that** the coupling structure is a structure according to any of the claims 1 to 8.

FIG. 1C

FIG. 1B

FIG. 1A

FIG. 2

FIG. 3A

FIG. 3B

# FIG. 3C

FIG. 3A'

FIG. 4

EP 2 430 397 B1

FIG. 5

## RÉFÉRENCES CITÉES DANS LA DESCRIPTION

**Documents brevets cités dans la description**

- US 5895850 A
- WO 2006037928 A
- US 2004154397 A
- US 2005072231 A
- US 20050210978 A
- US 20070013464 A

- WO 2008021534 A
- US 5763781 A
- WO 2007105211 A
- US 6134961 A
- US 6349597 B

**Littérature non-brevet citée dans la description**

- **T. JUNEAU et al.** Dual axis operation of a micromachined rate gyroscope. *Transducers, 1997 International Conference on Solid State Sensors and Actuators,* 16 Juin 1997, vol. 2, 883-886
- **W. GEIGER et al.** Decoupled microgyros and the design principle DAVED. *Sensors and Actuators A : Physical,* 2002, vol. 95 (2-3), 239-249

- **S. AN et al.** Dual-axis microgyroscope with closed-loop detection. *The Eleventh Annual International Workshop on Micro Electro Mechanical Systems,* 25 Janvier 1998, 328-333